# EUROPÄISCHE PATENTANMELDUNG

(11) **EP 3 988 394 A1**
(43) Veröffentlichungstag der Anmeldung: **27.04.2022**
(21) Anmeldenummer: 21197097.5
(22) Anmeldetag: 16.09.2021
(51) Int. Cl.: B60R 5/04

(54) **GEPÄCKRAUMABDECKUNG FÜR EIN KRAFTFAHRZEUG**

(30) Priorität: 20.10.2020 DE 102020127550
(71) Anmelder: Johann Borgers GmbH, 46397 Bocholt (DE)
(72) Erfinder: SIEBEN, Holger, 46397 Bocholt (DE)
(74) Vertreter: Viering, Jentschura & Partner mbB Patent- und Rechtsanwälte

(57) **Zusammenfassung**

Bei einer Gepäckraumabdeckung (1) für ein Kraftfahrzeug, die einen Deckel (2) mit einer daran mittels eines Filmscharniers (3) schwenkbar angelenkten Klappe (4) umfasst, wobei die Gepäckraumabdeckung (1) in ihrer Einbauposition im Kraftfahrzeug derart anordnenbar ist, dass die die Klappe (4) der Kontur des Deckels (2) folgend einen Spalt (13) überbrückt, der zwischen dem Deckel (2) und der Fahrzeugrückbank ausgebildet ist, soll eine Lösung geschaffen werden, die auch nach einer Vielzahl von Auf- und Abschwenkzyklen des Deckels eine Spaltbildung zur Rückseite der zugeordneten Fahrzeugrückbank vermeidet. Dies wird dadurch erreicht, dass an der der Fahrzeugvorderseite (V) zugewandten Rückseite eines linken und rechten Lagerbocks (5, 6) jeweils ein elastisches Anschlagelement (8, 9) aus einem weichen Kunststoffmaterial angeordnet ist, das sich bis unter die Klappe (4) der Gepäckraumabdeckung (1) erstreckt, wobei das jeweilige Anschlagelement (8, 9) als auf seiner Unterseite offener Hohlkörper (14, 20) mit außenseitig glatter Oberfläche und innenseitig aus seinen Wandungen hervorstehenden Versteifungsrippen (15) ausgebildet ist, und wobei die Wandstärke der Wandungen des Hohlkörpers (14, 20) und eine elastische Kraftentfaltung der Versteifungsrippen (15) derart aufeinander abgestimmt und ausgebildet sind, dass das weiche Kunststoffmaterial die außenseitige Oberfläche des Hohlkörpers (14, 20) mit einer Shore-Härte A von A40 - A80 ausbildet.

## Beschreibung

Die Erfindung richtet sich auf eine Gepäckraumabdeckung für ein Kraftfahrzeug, die einen Deckel mit einer daran mittels eines Filmscharniers schwenkbar angelenkten Klappe umfasst, wobei die Gepäckraumabdeckung zu ihrer Lagerung im rückwärtigen Fahrzeugbereich in Höhe einer Fahrzeugrückbank in Fahrzeuglängsrichtung einen linken und einen rechten Lagerbock aufweist, die gegenüberliegend zueinander am in Fahrzeuglängsrichtung linken und rechten äußeren Randbereich auf der Unterseite des Deckels nahe am Filmscharnier angeordnet sind und die im Zusammenwirken mit im Fahrzeuginnenraum ausgebildeten Fahrzeuginnenraumauflageelementen in ihrer Einbauposition im Kraftfahrzeug jeweils ein Drehlager ausbilden, sodass der Deckel im Fahrzeuginnenraum einen Laderaum überdeckend und um eine quer zur Fahrzeuglängsrichtung ausgerichtete Achse nach oben schwenkbar derart mittels des linken und rechten Lagerbocks in den im rückwärtigen Fahrzeugbereich nahe zur Fahrzeugrückbank ausgebildeten Fahrzeuginnenraumauflageelementen gelagert in der Einbauposition der Gepäckraumabdeckung im Kraftfahrzeug anordnenbar ist, dass die Klappe der Kontur des Deckels folgend einen Spalt überbrückt, der zwischen dem Deckel und der Fahrzeugrückbank ausgebildet ist.

Die Laderäume von Kraftfahrzeugen, hier insbesondere Personenkraftfahrzeuge, sind häufig durch rückwärtig zur Fahrzeugrückbank angeordnete Gepäckraumabdeckungen abgedeckt. Diese Gepäckraumabdeckungen sind in der Regel mittels Lagerböcken in Fahrzeuginnenraumauflageelementen gelagert, so dass sie um eine quer zur Fahrzeuglängsrichtung ausgerichtete Achse frei beweglich aus ihrer Ruheposition in eine Öffnungsposition und wieder zurück geschwenkt werden können. Hierbei sind die Gepäckraumabdeckungen häufig über Verbindungselemente, am einfachsten zwei links und rechts angeordnete textile Kordeln, mit einer Fahrzeugheckklappe verbunden, so dass beim Aufschwenken der Heckklappe die Gepäckraumabdeckung nach oben verschwenkt und ein Zugang zum Lade- oder Gepäckraum möglich wird.

Derartige Gepäckraumabdeckungen bestehen häufig aus einem Deckel und einer daran über ein Filmscharnier angelenkten, in Fahrzeuglängsrichtung deutlich kürzer als der Deckel ausgebildeten Klappe. Die Klappe dient dabei dazu, einen bei Lagerung der Gepäckraumabdeckung in den seitlich ausgebildeten Fahrzeuginnenraumauflageelementen in Fahrzeuglängsrichtung zwischen dem Deckel und der Rückseite einer angrenzenden Fahrzeugrückbank verbleibenden und quer zur Fahrzeuglängsrichtung verlaufenden Spalt möglichst sichtdicht zu überbrücken. In ihrer Ruhelage soll die Gepäckraumabdeckung den Laderaum zum Schutz des Ladegutes, insbesondere zum Schutz vor einfallendem Sonnenlicht und Staub, der über den Fahrgastraum in den Laderaum gelangen kann, abdecken.

Mehrfaches Öffnen und Schließen der Heckklappe eines mit einer solchen Gepäckraumabdeckung ausgestatteten Kraftfahrzeugs führt nun dazu, dass das dabei durch das jeweilige Aufschwenken des Deckels bewegte Filmscharnier ermüdet und damit die über das Filmscharnier auf die Klappe ausgeübte Spannkraft nachlässt. Dies kann bereits innerhalb weniger Zyklen des Öffnens und Schließens der Heckklappe und damit des Auf- und Abschwenkens des Deckels der Gepäckraumabdeckung dazu führen, dass sich dann zwischen dem der Rückseite der Fahrzeugrückbank zugewandten Ende der Klappe und der Rückseite der Rückbank ein Spalt bildet. Dies ist unerwünscht, da dadurch wieder Licht und Staub in den Gepäckraum einfallen kann. Hinzu kommt, dass Fahrzeugrückbänke häufig zumindest in Teilbereichen, beispielsweise im Verhältnis von ein Drittel zu zwei Drittel, zur Erweiterung des Laderaumes nach vorne klappbar konstruiert sind. Wird eine nach vorne geklappte Lehne dann wieder zurückgeklappt, ergibt sich auch hier, insbesondere aufgrund bestehender Fertigungstoleranzen, häufig eine Lasteinwirkung auf die Klappe und damit das Filmscharnier, was ebenfalls zu einer Ermüdung der Wirkung des Filmscharniers mit der Folge einer Spaltbildung zwischen Klappe und Fahrzeugrückbank führt.

Der Erfindung liegt daher die Aufgabe zugrunde, eine Lösung zu schaffen, die auch nach einer Vielzahl von Auf- und Abschwenkzyklen des in seiner Gebrauchsposition im Kraftfahrzeug angeordneten Deckels der Gepäckraumabdeckung eine Spaltbildung der am Deckel mittels eines Filmscharniers abgelenkten Klappe zur Rückseite der zugeordneten Fahrzeugrückbank vermeidet.

Bei einer Gepäckraumabdeckung der eingangs näher bezeichneten Art wird diese Aufgabe erfindungsgemäß dadurch gelöst, dass an der der Fahrzeugvorderseite zugewandten Rückseite des linken und rechten Lagerbocks jeweils ein linkes und ein rechtes elastisches Anschlagelement aus einem weichen, vorzugsweise gummiartigen, Kunststoffmaterial angeordnet ist, das sich über das Filmscharnier hinausgehend bis unter die Klappe der Gepäckraumabdeckung erstreckt und auf welchem die Klappe der Gepäckraumabdeckung aufliegt und das jeweils derart dimensioniert ist, dass es bei Anordnung des Deckels in den Fahrzeuginnenraumauflageelementen unterhalb der Unterseite der Klappe in Fahrzeuglängsrichtung in den zwischen den Lagerböcken und der Fahrzeugrückbank ausgebildeten Spalt ragt, wobei das linke und das rechte Anschlagelement jeweils als vorzugsweise einseitig, insbesondere auf seiner Unterseite, offener Hohlkörper mit außenseitig glatter Oberfläche seiner Wandungen und innenseitig aus seinen Wandungen hervorstehenden Versteifungsrippen ausgebildet ist, wobei die Wandstärke der Wandungen des Hohlkörpers und eine elastische Kraftentfaltung der Versteifungsrippen derart aufeinander abgestimmt und ausgebildet sind, dass das weiche Kunststoffmaterial die außenseitige Oberfläche des Hohlkörpers mit einer Shore-Härte A von A40 bis A80 ausbildet.

Mittels der erfindungsgemäß vorgesehenen elastischen Anschlagelemente werden weiche Auflagekissen für die Klappe und damit die Wirkung des Filmscharniers unterstützende Auflageelemente geschaffen und bereitgestellt, die einer Feder ähnlich bei einem Aufschwenken des Deckels über das Scharnier und die Klappe auf sie einwirkende Kräfte abfedernd aufnehmen, indem sich das elastische Material in den Bereichen, die mit der Unterseite der Klappe in Kontakt stehen, der einwirkenden Kraft entsprechend leicht verformt. Hierdurch wird eine in dem elastischen Material der Anschlagelemente angelegte elastische Rückstellkraft aktiviert. Beim Zuschwenken des Deckels der Gepäckraumabdeckung lässt dann die über die Klappe auf die Anschlagelemente einwirkende Kraft wieder nach, so dass die aktivierte elastische Rückstellkraft der Anschlagelemente die Klappe in die Wirkung des Filmscharniers unterstützender Weise wieder in ihre Ausgangsposition, d.h. die Ruheposition der Klappe und des Deckels und damit der Gepäckraumabdeckung zurückführt. Die gebildete leichte Verformung oder Deformierung der Oberfläche der Anschlagelemente bildet sich dabei wieder zurück. Aufgrund dieses mittels der Anschlagelemente ausgebildeten Wirkmechanismus wird auch nach einer Vielzahl von Auf- und Ab- oder Zu-Schwenkzyklen der Gepäckraumabdeckung die Ausbildung eines Spaltes zwischen der Klappe und der zugeordneten Fahrzeugrückbank vermieden.

Um diesen Wirkmechanismus ausbilden zu können, sind die elastischen Anschlagelemente jeweils als vorzugsweise einseitig, insbesondere auf seiner Unterseite, offener Hohlkörper ausgebildet, der auf seiner Außenseite eine glatte Oberfläche aufweist und der innenseitig mit aus seinen Wandungen hervorstehenden Versteifungsrippen ausgebildet ist. Hierbei sind dann die Wandstärke der Wandungen des jeweiligen Anschlagelementes bzw. Hohlkörpers und die sich durch die Ausbildung der einzelnen Versteifungsrippen ergebende elastische Kraftentfaltung derart aufeinander abgestimmt und ausgebildet, dass sich beim Aufschwenken des Deckels der Gepäckraumabdeckung die jeweils gewünschte elastische Rückstellkraft einstellt, die dann beim Zuschwenken des Deckels ihre Wirkung rückstellende entfaltet. Dies wird dadurch erreicht, dass das weiche Kunststoffmaterial, aus welchem die jeweils als Hohlkörper ausgebildeten Anschlagelement bestehen, die außenseitige Oberfläche des jeweiligen Hohlkörpers derart ausbildet, dass sie eine Shore-Härte A von A40 bis A80 aufweist.

Weiterhin ist es zur Erzielung des vorstehend beschriebenen Wirkmechanismus notwendig, dass die elastischen Anschlagelemente sich über das Filmscharnier hinausgehend bis unter die Klappe der Gepäckraumabdeckung in den zwischen dem rückseitigen Ende des Deckels, d.h. dem Filmscharnier, und der Rückseite der Fahrzeugrückbank verbleibenden Spalt unterhalb der Klappe erstrecken und die Klappe - auch bereits in der Ruheposition der Gepäckraumabdeckung - darauf aufliegt.

Um die gewünschte Wirkweise, d.h. die gewünschte elastische Rückstellkraft, gut und genau einstellen zu können, ist es gemäß Weiterbildung der Erfindung von Vorteil, wenn die Versteifungsrippen zum Teil in einem Winkel von 45° bis 60° quer zur Hauptlängsachse des Hohlkörpers angeordnet sind. Durch diese quer zur Hauptlängsachse verlaufende Anordnung der Versteifungsrippen lässt sich die gewünschte Wirkungsweise des jeweiligen, ein Anschlagelement ausbildenden Hohlkörpers gut und fein über die außenseitige Oberfläche des Hohlkörpers verteilt ausbilden. Die Versteifungsrippen bilden somit eine Art Dachkonstruktion des Hohlkörpers, auf welcher die Wandung des Hohlkörpers aufliegt.

Die Versteifungsrippen sind vorzugsweise einteilig und materialgleich mit der Wandung des jeweils ein Anschlagelement ausbildenden Hohlkörpers ausgebildet, was die Erfindung in Weiterbildung weiterhin vorsieht.

Als geeignetes weiches, insbesondere gummiartiges und elastisches bzw. dauerelastisches (unvernetzt, teilvernetzt oder vollvernetzt) Kunststoffmaterial haben sich insbesondere Thermoplaste mit einer Gebrauchstemperaturbeständigkeit von mindestens 80 °C (oder höher) erwiesen. Insbesondere vorteilhaft sind Ethylen-Propylen-Dien Kautschuk der M-Gruppe (EPDM; M-Gruppe ist ein Hinweis darauf, dass es sich um ein Monomer handelt; EPDM z.B. als Kunststoffbahn Shore-A 67), Styrol-Butadien-Kautschuk sowie Ethylen-Propylen-Dien Co-Polymer der M-Gruppe und Styrol-Butadien Co-Polymer. Die Erfindung zeichnet sich daher weiterhin dadurch aus, dass das Kunststoffmaterial des Hohlkörpers ein Thermoplast mit einer Gebrauchstemperaturbeständigkeit von mindestens 80 °C, insbesondere ein Ethylen-Propylen-Dien Kautschuk der M-Gruppe (EPDM) oder ein Ethylen-Propylen-Dien Co-Polymer der M-Gruppe oder ein Styrol-Butadien-Kautschuk oder ein Styrol-Butadien Co-Polymer ist.

Besonders einfach und günstig lässt sich der jeweilige Hohlkörper, der ein Anschlagelement ausbildet, im Spritzgussverfahren oder mittels eines Extrusionsverfahrens herstellen.

Die auf die Klappe einwirkende Kraftverteilung lässt sich noch dadurch verbessern, dass mittig zwischen dem linken und dem rechten Anschlagelement ein weiteres Anschlagelement ausgebildet ist, das identisch zu den linken und rechten Anschlagelementen als Hohlkörper mit innenliegenden Versteifungsrippen und einer Oberflächen-Shore-Härte A von A40 bis A80 ausgebildet sowie gleichwirkend dimensioniert ist, d.h. in den Spalt zwischen Deckel und zugeordneter Fahrzeugrückbank hineinragend und unterhalb der Klappe endend, der es als Auflage dient, ausgebildet ist. Die Erfindung zeichnet sich daher schließlich auch dadurch aus, dass mittig zwischen den beiden jeweils am linken und rechten Lagerbock angeordneten Hohlkörpern ein identisch ausgebildeter und gleichwirkend dimensionierter weiterer Hohlkörper als weiteres elastisches Anschlagelement an der Unterseite des Deckels angeordnet ist.

Die Erfindung ist nachstehend anhand einer Zeichnung beispielhaft näher erläutert. Diese zeigt in
- Fig. 1: eine schematische Seitenansicht einer Gepäckraumabdeckung im Bereich eines Lagerbocks,
- Fig. 2: eine schematische Aufsicht auf den Lagerbock nach Fig. 1 mit daran angeordnetem elastischen Anschlagelement und in
- Fig. 3: eine Unteransicht einer Gepäckraumabdeckung.

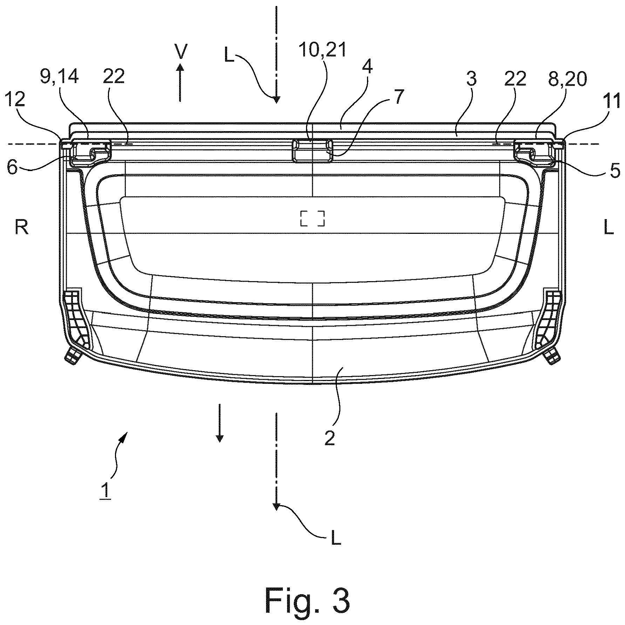

Die in Fig. 3 dargestellte und insgesamt mit 1 bezeichnete Gepäckraumabdeckung besteht aus einem Deckel 2 und einer daran über ein Filmscharnier 3 angelenkten Klappe 4, die in Fahrzeuglängsrichtung L deutlich kürzer als der Deckel 2 ausgebildet ist, im Übrigen aber dessen seitliche Kontor in Fahrzeuglängsrichtung L im Wesentlichen fortsetzt. In der Fig. 3 ist die Fahrzeuglängsrichtung als strichpunktierter Pfeil L dargestellt. Da die Gepäckraumabdeckung 1 in der Fig. 3 von ihrer Unterseite dargestellt ist, befindet sich die Fahrzeugvorderseite in Richtung des Pfeiles V und die Fahrzeugrückseite in Richtung des Pfeiles H. Die linke Seite des Kraftfahrzeuges ist mit L und die rechte Seites des Kraftfahrzeuges mit R gekennzeichnet. Auf der Unterseite des Deckels 2 der Gepäckraumabdeckung 1 ist im linken Randbereich nahe zum Filmscharnier 3 ein linker Lagerbock 5 und auf der rechten Seite ist im rechten Randbereich nahe zum Filmscharnier 3 ein rechter Lagerbock 6 angeordnet. Mittig zwischen dem linken und dem rechten Lagerbock 5, 6 ist ein weiteres Lagerelement 7 ebenfalls nahe am Filmscharnier 3, das sich durchgehend von der linken bis zur rechten Seite des Deckels 2 erstreckt, angeordnet. An dem linken Lagerbock 5 ist an der der Fahrzeugvorderseite V zugewandten Rückseite ein linkes Anschlagelement 8 angeordnet. In analoger Weise ist an der der Fahrzeugvorderseite zugewandten Rückseite des rechten Lagerbocks 6 ein rechtes Anschlagelement 9 und an der der Vorderseite V zugewandten Rückseite des weiteren Lagerelementes 7 ein weiteres Anschlagelement 10 angeordnet.

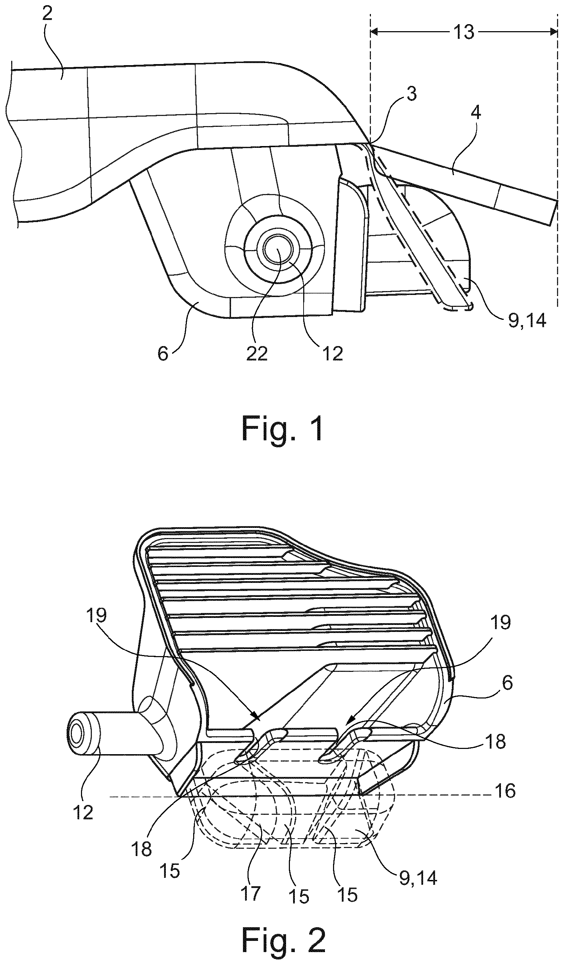

Der linke und rechte Lagerbock 5, 6 weisen jeweils einen aus ihrer Seitenwand nach links oder rechts hervorstehenden Drehachskörper 11, 12 auf. Zu ihrer Lagerung im rückwärtigen Fahrzeugbereich in Höhe einer nicht näher dargestellten Fahrzeugrückbank wirkt die Gepäckraumabdeckung 1 mit im Fahrzeuginnenraum ausgebildeten und ebenfalls nicht näher dargestellten Fahrzeuginnenraumauflageelementen derart zusammen, dass die jeweiligen Drehachskörper 11, 12 des linken und rechten Lagerbocks 5, 6 zusammen mit dem jeweils zugeordneten Fahrzeuginnenraumauflageelement ein Drehlager ausbilden. In dieser Einbauposition überdeckt der Deckel 2 dann im Fahrzeuginnenraum einen Laderaum und ist zudem um die quer zur Fahrzeuglängsrichtung L mittels der Drehachskörper 11, 12 ausgebildeten Achse 22 in den Drehlagern aus ihrer Ruheposition nach oben schwenkbar angeordnet. In seiner Ruhe- und Einbauposition ist der Deckel 2 im rückwärtigen Fahrzeugbereich nahe zur Fahrzeugrückbank und mit einem solchen Abstand zu dieser positioniert, dass die Klappe 4 der Kontur des Deckels folgend einen in der Fig. 1 angedeuteten und bis zur Rückbank reichenden Spalt 13 überbrückt, der zwischen dem Deckel 2 und der Fahrzeugrückbank ausgebildet ist und der sich quer zur Fahrzeuglängsrichtung L erstreckt. Diese schwenkbare Lagerung des Deckels 2 erlaubt es, diesen zusammen mit einer daran befestigten Heckklappe des Kraftfahrzeuges in eine Öffnungsposition aufzuschwenken und aus dieser wieder in die Ruhe- und Einbauposition der Gepäckraumabdeckung 1 zurück- oder zuzuschwenken. Diese Einbau- und Ruheposition des Deckels und der daran angelenkten Klappe 4 ist in der Fig. 1 dargestellt. Dabei zeigt die Darstellung der Klappe 4 in durchgezogenen schwarzen Linien deren erfindungsgemäße Position bei Auflage auf dem Hohlkörper 14, wohingegen die gestrichelte Darstellung der Klappe 14 deren Lage bei Ausführungsformen nach dem Stand der Technik zeigt, bei welchen der Hohlkörper 14 nicht vorhanden ist.

In der Fig. 2 ist in Aufsicht ein rechter Lagerbock 6 mit dem daran angeordneten und befestigten rechten Anschlagelement 9 dargestellt. Während es sich bei dem rechten Lagerbock 6 um einen nach oben offenen Hohlkörper handelt, bildet das rechte Anschlagelement 9 einen nach unten offenen rechten Hohlkörper 14 aus. Dieses elastische rechte Anschlagelement 9 weist außenseitig eine glatte im Übergang der Seitenflächen des rechten Hohlkörpers 14 abgerundete Oberfläche der Wandungen des Hohlkörpers 14 und innenseitig aus den Wandungen des Hohlkörpers 14 nach Art einer Dachkonstruktion hervorstehende Versteifungsrippen 15 auf. Die Versteifungsrippen 15 bilden somit eine Art Dachkonstruktion des Hohlkörpers 14 aus, auf welcher die Wandungen des Hohlkörpers 14 aufliegen. Die Versteifungsrippen 15 erstrecken sich jeweils durchgehend von einer Seitenwand ausgehend, längs dieser Seitenwand, längs der angrenzenden Deckenwand und längs der jeweils gegenüberliegenden Seitenwand des Hohlkörpers 14. Der rechte Hohlkörper 14 besteht aus einem weichen, vorzugsweise gummiartigen Kunststoffmaterial und die Wandstärke der Wandungen des Hohlkörpers 14 sowie eine elastische Kraftentfaltung der Versteifungsrippen 15 sind derart aufeinander abgestimmt und ausgebildet, dass das weiche Kunststoffmaterial die außenseitige Oberfläche des rechten Hohlkörpers 14 mit einer Shore-Härte A von A40 bis A80 ausbildet, d.h. dass die Außenseite des rechten Hohlkörpers 14 eine derartige Oberflächen-Shore-Härte A aufweist. Zumindest ein Teil der Versteifungsrippen 15 ist in einem Winkel von 45° bis 60° quer zur Hauptlängsachse 16 des rechten Hohlkörpers 14 ausgebildet und angeordnet. Unterseitig ist der rechte Hohlkörper 14 offen ausgebildet, so dass sich insgesamt ein gewölbter, von unten zugänglicher Hohlköper 14 ausbildet. Zur Versteifung sind die unterseitigen sich gegenüberliegenden Längsränder mittels sich quer durch den Öffnungsquerschnitt des rechten Hohlkörpers 14 erstreckender weiterer Versteifungsrippen 17 verstärkt. Auf der dem rechten Lagerbock 6 zugewandten Seitenfläche ist der rechte Hohlkörper 14 mit daraus hervorstehenden Befestigungsstegen 18 versehen, die in der der Fahrzeugvorderseite V zugewandten Rückseite des rechten Lagerbocks 6 ausgebildete Halteschlitze 19 hintergreifen. Dadurch ist der das rechte Anschlagelement 9 ausbildende rechte Hohlkörper 14 an dem rechten Lagerbock 6 festgelegt.

Der linke Hohlkörper 20, der das linke Anschlagelement 9 ausbildet sowie der mittige oder mittlere Hohlkörper 21, der das weitere Anschlagelement 10 ausbildet, sind identisch zu dem vorstehend beschriebenen rechten Hohlkörper 14 aufgebaut und ausgebildet. In analoger Weise weist auch die jeweilige Rückwand des linken Lagerbocks 5 und des weiteren Lagerelementes 7 jeweils Halteschlitze 19 zur Aufnahme von Befestigungsstegen 18 des jeweiligen Hohlkörpers 20, 21 auf.

Alle jeweils ein Anschlagelement 8, 9, 10 ausbildenden Hohlkörper 14, 20, 21 sind derart dimensioniert, dass sie sich unterhalb des Filmscharniers 3 bis an die Unterseite der daran angelenkten Klappe 4 erstrecken, so dass die Klappe 4 in der Gebrauchsposition der Gepäckraumabdeckung 1 auf der weichen, die erfindungsgemäße Shore-Härte A von A40 bis A80 aufweisenden Oberfläche aufliegt, wie dies in der Fig. 1 durch die mit durchgezogenen Linien dargestellte Klappe 4 ersichtlich ist. In dieser Position ragen die Hohlkörper 14, 20 und 21 in den zwischen den Lagerböcken 5, 6, 7 und der nicht näher dargestellten Fahrzeugrückbank ausgebildeten Spalt 13 hinein.

Der jeweilige Hohlkörper 14, 20, 21 bildet mit seiner Oberfläche eine weiche, elastisch nachgiebige Auflage für die Unterseite der Klappe 4 aus. In dem Fall, dass der Deckel aufgeschwenkt wird, führt die über das Filmscharnier 3 auf die Klappe 4 übertragene Kraft dazu, dass die Klappe 4 ihrerseits eine kraftabhängige Verformung des weichen Kunststoffmaterials bewirkt, aus welchem die Hohlkörper 14, 20, 21 hergestellt sind. Dadurch wird eine elastische Rückstellkraft induziert bzw. aktiviert, die dann bei einem Zurückschwenken des Deckels 2 in seine Ruheposition auch ein gegebenenfalls notwendiges Rückschwenken der Klappe 4 bewirkt oder unterstützt. Die federnde Wirkung der Oberfläche der elastischen Auflageelemente 8, 9 und 10 sorgt also dafür, dass die Klappe 4 immer an die Rückenlehne oder die Rückseite der Fahrzeugrückbank angedrückt bzw. in dieser Position gehalten wird. Dies gilt sowohl für den Fall, dass beim Auf- und Zuschwenken des Deckels über das Filmscharnier 3 aufgrund dieser Schwenkbewegung Kräfte auf die Klappe 4 ausgeübt werden als auch für den Fall, dass von Seiten der Fahrzeugrückbank, beispielsweise bei einem Auf- und Wiederzuklappens eines Teiles der Rückbank, wie dies beispielsweise bei einer ein Drittel zu zwei Drittel Teilung üblich ist, von der dem Filmscharnier 3 gegenüberliegenden, entfernten Seite der Klappe 4 Kräfte auf die Klappe 4 einwirken. In all diesen Kraftbelastungsfällen hält ein jeder der elastischen Hohlkörper 14, 20, 21, die jeweils ein Anschlagelement 8, 9, 10 ausbilden, die Klappe 4 in der gewünschten Position und ermöglicht es der Klappe 4 bei von außen einwirkenden Kräften, diesen ausreichend nachzugeben sowie bei einem Nachlassen der Kräfte sich wieder in ihre Ausgangsposition zurückzubewegen, so dass es auch nach einer Vielzahl an Krafteinwirkungszyklen nicht zu einer Bildung eines Spaltes zwischen der der Fahrzeugvorderseite zugewandten Endkante der Klappe 4 und einer dieser Seite zugeordneten und daran angrenzenden Fahrzeugrückbank, insbesondere einer Rückenlehne einer Fahrzeugrückbank, kommt.

Um diesen Wirkmechanismus ermöglichen und auch genau einstellen zu können, sind die Versteifungsrippen 15, 17 und die Wandung des jeweiligen Hohlkörpers 14, 20, 21 einteilig und materialgleich aus einem weichen Kunststoff mittels eines Spritzgussverfahrens oder eines Extrusionsverfahrens hergestellt. Geeignete Kunststoffe sind Ethylen-Propylen-Dien Kautschuk der M-Gruppe (EPDM), Styrol-Butadien-Kautschuk sowie Ethylen-Propylen-Dien Co-Polymer der M-Gruppe und Styrol-Butadien Co-Polymer. Aus diesen sind die Hohlkörper 14, 20 und 21 hergestellt.

## Patentansprüche

1. Gepäckraumabdeckung (1) für ein Kraftfahrzeug, die einen Deckel (2) mit einer daran mittels eines Filmscharniers (3) schwenkbar angelenkten Klappe (4) umfasst, wobei die Gepäckraumabdeckung (1) zu ihrer Lagerung im rückwärtigen Fahrzeugbereich in Höhe einer Fahrzeugrückbank in Fahrzeuglängsrichtung (L) einen linken und einen rechten Lagerbock (5, 6) aufweist, die gegenüberliegend zueinander am in Fahrzeuglängsrichtung (L) linken und rechten äußeren Randbereich auf der Unterseite des Deckels (2) nahe am Filmscharnier (3) angeordnet sind und die im Zusammenwirken mit im Fahrzeuginnenraum ausgebildeten Fahrzeuginnenraumauflageelementen in ihrer Einbauposition im Kraftfahrzeug jeweils ein Drehlager ausbilden, sodass der Deckel (2) im Fahrzeuginnenraum einen Laderaum überdeckend und um eine quer zur Fahrzeuglängsrichtung (L) ausgerichtete Achse (22) nach oben schwenkbar derart mittels des linken und rechten Lagerbocks (5, 6) in den im rückwärtigen Fahrzeugbereich nahe zur Fahrzeugrückbank ausgebildeten Fahrzeuginnenraumauflageelementen gelagert in der Einbauposition der Gepäckraumabdeckung (1) im Kraftfahrzeug anordnenbar ist, dass die Klappe (4) der Kontur des Deckels (2) folgend einen Spalt (13) überbrückt, der zwischen dem Deckel (2) und der Fahrzeugrückbank ausgebildet ist,
**dadurch gekennzeichnet,**
**dass** an der der Fahrzeugvorderseite (V) zugewandten Rückseite des linken und rechten Lagerbocks (5, 6) jeweils ein linkes und ein rechtes elastisches Anschlagelement (8, 9) aus einem weichen, vorzugsweise gummiartigen, Kunststoffmaterial angeordnet ist, das sich über das Filmscharnier (3) hinausgehend bis unter die Klappe (4) der Gepäckraumabdeckung (1) erstreckt und auf welchem die Klappe (4) der Gepäckraumabdeckung (1) aufliegt und das jeweils derart dimensioniert ist, dass es bei Anordnung des Deckels (2) in den Fahrzeuginnenraumauflageelementen unterhalb der Unterseite der Klappe (4) in Fahrzeuglängsrichtung (L) in den zwischen den Lagerböcken (5, 6) und der Fahrzeugrückbank ausgebildeten Spalt (13) ragt, wobei das linke und das rechte Anschlagelement (8, 9) jeweils als vorzugsweise einseitig, insbesondere auf seiner Unterseite, offener Hohlkörper (14, 20) mit außenseitig glatter Oberfläche seiner Wandungen und innenseitig aus seinen Wandungen hervorstehenden Versteifungsrippen (15) ausgebildet ist, wobei die Wandstärke der Wandungen des Hohlkörpers (14, 20) und eine elastische Kraftentfaltung der Versteifungsrippen (15) derart aufeinander abgestimmt und ausgebildet sind, dass das weiche Kunststoffmaterial die außenseitige Oberfläche des Hohlkörpers (14, 20) mit einer Shore-Härte A von A40 - A80 ausbildet.

2. Gepäckraumabdeckung (1) nach Anspruch 1, **dadurch gekennzeichnet, dass** zumindest ein Teil der Versteifungsrippen (15) in einem Winkel von 45° - 60° quer zur Hauptlängsachse (16) des Hohlkörpers (14, 20) angeordnet sind.

3. Gepäckraumabdeckung (1) nach Anspruch 1 oder 2, **dadurch gekennzeichnet, dass** die Versteifungsrippen (15) einteilig und materialgleich mit der Wandung des Hohlkörpers (14, 20) ausgebildet sind.

4. Gepäckraumabdeckung (1) nach einem der Ansprüche 1 - 3, **dadurch gekennzeichnet, dass** das Kunststoffmaterial des Hohlkörpers (14, 20) ein Thermoplast mit einer Gebrauchstemperaturbeständigkeit von mindestens 80 °C, insbesondere ein Ethylen-Propylen-Dien Kautschuk der M-Gruppe (EPDM) oder ein Ethylen-Propylen-Dien Co-Polymer der M-Gruppe oder ein Styrol-Butadien-Kautschuk oder ein Styrol-Butadien Co-Polymer ist.

5. Gepäckraumabdeckung (1) nach einem der vorhergehenden Ansprüche, **dadurch gekennzeichnet, dass** der Hohlkörper (14, 20) mittels eines Spritzgussverfahrens oder eines Extrusionsverfahrens hergestellt ist.

6. Gepäckraumabdeckung (1) nach einem der vorhergehenden Ansprüche, **dadurch gekennzeichnet, dass** mittig zwischen den beiden jeweils am linken und rechten Lagerbock (5, 6) angeordneten Hohlkörpern (14, 20) ein identisch ausgebildeter und gleichwirkend dimensionierter weiterer Hohlkörper (21) als weiteres elastisches Anschlagelement (10) an der Unterseite des Deckels (2) angeordnet ist.
